**Europäisches Patentamt**

**European Patent Office**

**Office européen des brevets**

(11) Veröffentlichungsnummer: **0 286 706**
**A1**

# EUROPÄISCHE PATENTANMELDUNG

(21) Anmeldenummer: **87105615.6**

(22) Anmeldetag: **15.04.87**

(51) Int. Cl.4 **F16B 13/12**

(43) Veröffentlichungstag der Anmeldung:
**19.10.88 Patentblatt 88/42**

(84) Benannte Vertragsstaaten:
**BE DE GB NL SE**

(71) Anmelder: **GAPA-Werk Papenberg & Garz (GmbH & Co.)**
**Helbingtwiete 6**
**D-2000 Hamburg 70(DE)**

(72) Erfinder: **Gehring, Manfred**
**Hermann-Hesse-Strasse 23**
**D-7290 Freudenstadt(DE)**

(74) Vertreter: **Patentanwälte Kohler - Schwindling - Späth**
**Hohentwielstrasse 41**
**D-7000 Stuttgart 1(DE)**

(54) **Dübelelement.**

(57) Zum Befestigen von Isolierplatten (21) an einer tragenden Mauer (22) wird ein Dübelelement Verwendet, das im Anschluß an einen aufspreizbaren Abschnitt (2) einen hülsenförmigen Abschnitt (3) aufweist, der bei montiertem Dübelelement aus der Mauer (22) herausragt und außen mit Querrippen (4) versehen ist, so daß eine Haltescheibe (11) auf diesem Abschnitt einen sicheren Sitz findet. Diese Haltescheibe (11) kann an ihrer der Mauer (22) zugewandten Seite mit einem Rohrstutzen (14) versehen sein, an dessen Ende eine Profilierung (16) angebracht ist, so daß die Befestigung von Isolierplatten (21) möglich ist, deren Dicke größer ist als die Länge des hülsenförmigen Abschnittes (3).

Fig. 2

EP 0 286 706 A1

## Dübelelement

Die Erfindung betrifft ein Dübelelement, insbesondere für Luftschichtanker, mit einem aufspreizbaren Körper aus Kunststoff.

Aus der DE-AS 20 26 139 ist ein Luftschichtanker bekannt, der aus einem Dübelelement und einem mit seiner Spitze in das Dübelelement einschlagbaren Drahtelement besteht. Ein solcher Luftschichtanker ist dazu bestimmt, ein tragendes Mauerwerk und ein mit Abstand davor errichtetes Verblendmauerwerk miteinander zu verbinden. Zu diesem Zweck wird das tragende Mauerwerk mit Bohrungen versehen, in welche die Dübelelemente eingeführt werden, in die wiederum die Drahtelemente eingeschlagen werden. Die freien Enden der Drahtelemente werden dann in die Fugen des vorgesetzten Verblendmauerwerkes eingemauert, vorzugsweise nachdem diese Drahtenden abgewinkelt worden sind, damit sie in dem Verblendmauerwerk eine gute Verankerung erhalten. Dabei dienen die Drahtelemente zugleich zum Befestigen von Isolierplatten an der Außenseite des tragenden Mauerwerkes. Diese Isolierplatten werden auf die Drahtelemente aufgesteckt und mittels auf die Drahtelemente aufgeschobenen Haltescheiben gegen das tragende Mauerwerk gedrückt. Diese Haltescheiben haben in ihrer Mitte eine sternförmige Öffnung, deren lichte Weite kleiner ist als der Durchmesser des Drahtelementes, so daß beim Aufdrücken der Haltescheiben auf das Drahtelement die von den radialen Schlitzen der sternförmigen Öffnung begrenzten Zungen entgegen der Schieberichtung nach außen weggebogen werden und Krallen bilden, die ein Zurückgleiten der Haltescheibe verhindern.

Der Nachteil einer solchen Halteanordnung besteht darin, daß die von dem tragenden Mauerwerk abstehenden, zunächst noch geraden Drahtelemente eine erhebliche Gefahr bilden, und zwar insbesondere beim Aufstecken der Isolierplatten. Dem Arbeiter ist beim Aufschieben der Isolierung nicht bekannt, an welcher Stelle die spitzen Enden der Drahtelemente durch die Isolierplatten hindurchtreten. Da andererseits das Aufschieben der Isolierplatten auf diese Drahtelemente eine nicht unerhebliche Kraft erfordert, der plötzlich kein Widerstand mehr entgegengesetzt wird, wenn die Drahtelemente aus den Isolierplatten austreten, kommt der Arbeiter mit der zum Aufschieben der Isolierplatte notwendigen, vollen Kraft mit den Spitzen der Drahtelemente in Berührung, so daß es immer wieder zu schweren Verletzungen an der Innenhand und am Unterarm der Arbeiter kommt. Weiterhin verhindern die Drahtelemente der Luftschicht anker auch eine in jeder Hinsicht einwandfreie Ausführung der Isolierung. Wegen des langen Weges, den die Isolierplatten vom Ende der Drahtelemente bis zum Anliegen an die Außenwand zurückzulegen haben, kann nicht genau abgeschätzt werden, wo die Platte anzusetzen ist, so daß durch Fehler beim Ansetzen der Platten Fugen zwischen den Platten entstehen. Selbst wenn versucht wird, solche Fugen durch Drücken der Platten bündig zu stoßen, kann ein solches Bündigstoßen nur unter Verletzung des Isoliermaterials im Bereich der Durchtrittstelle des Drahtes durch die Isolierplatten zustande kommen. Dabei kommt es auch zu einem Komprimieren des Isolierliermaterials im Bereich der Durchtrittstelle mit dem Ergebnis, daß sich das komprimierte Material zurückstellt und sich erneut Fugen bilden. Durch die genannten Zerstörungen und Fugen kommt es weiterhin zu einer oft nicht unerheblichen Verminderung der Wärmedämmwerte. Im gleichen Sinne wirkt auch die Tatsache, daß es beim Austreten der Drahtenden aus der Isolierplatte zu Ausplatzungen kommen kann. Endlich ist auch die Klemmkraft der Haltescheiben auf dem verhältnismäßig dünnen und in der Regel leicht fettigen Drahtelement nur gering. Es besteht daher ständig die Gefahr, daß sich die Haltescheiben lockern, insbesondere infolge von Erschütterungen, denen ein Gebäude durch benachbarten Straßenverkehr, durch Arbeiten mit Schlagbohrmaschinen und dgl. ständig ausgesetzt ist. Die Klemmscheiben und mit ihnen die Isolierplatten können dann nach außen wandern und damit die bauphysikalisch wichtige Funktion der Luftschicht beeinträchtigen oder gar unwirksam machen.

Der Erfindung liegt die Aufgabe zugrunde, die Befestigung von Isolierplatten an einem tragenden Mauerwerk, insbesondere wenn dem tragenden Mauerwerk ein mittels Luftschichtankern gehaltenes Verblendmauerwerk vorgesetzt ist, in der Weise zu ver bessern, daß sowohl die Benutzung der Befestigungsmittel vereinfacht als auch die Sicherheit der Befestigung erhöht wird.

Diese Aufgabe wird nach der Erfindung dadurch gelöst, daß der aufspreizbare Körper von dem aufspreizbaren Abschnitt eines Ankerteiles gebildet wird, an den sich ein hülsenförmiger Abschnitt anschließt, der mit quer zu seiner Achse gerichteten Rippen, insbesondere mit einem Außengewinde, versehen ist, und daß dem hülsenförmigen Abschnitt eine Haltescheibe mit einer der Profilierung des hülsenförmigen Abschnittes angepaßten, zentralen Bohrung zugeordnet ist, also insbesondere mit einer dem Außengewinde des hülsenförmigen Abschnittes angepaßten Gewindebohrung.

Bei Anwendung des erfindungsgemäßen Dübelelementes findet also nicht mehr wie bisher das dünne Drahtelement des Luftschichtankers zur Befestigung der Isolierplatten Verwendung, sondern ein hülsenförmiger Abschnitt des Ankerteiles in Verbindung mit einer auf diesen Abschnitt aufgesteckten oder aufgeschraubten Haltescheibe. Zum Montieren von Isolierplatten können nunmehr die zur Aufnahme der Dübelelemente erforderlichen Löcher durch die Isolierplatten hindurchgebohrt werden, weil der Durchmesser des hülsenförmigen Abschnittes mindestens gleich dem Durchmesser des Dübelloches ist und daher in ein solches durch die Isolierplatte hindurchgebohrtes Loch ohne Spiel oder sogar unter Spannung eingreift und dadurch die Lage der Isolierplatte eindeutig bestimmt. Das Bohren der Löcher durch die Isolierplatten hindurch ermöglicht es, diese Isolierplatten vor dem Bohren der Löcher in die richtige Lage zu bringen, in denen sie mit dicht geschlossenen Fugen aneinander anschließen. Weiterhin kann es auch keinerlei Verletzungen beim Aufstecken der Isolierplatten mehr geben und es haben auch die Haltescheiben auf dem hülsenförmigen Abschnitt des Ankerteiles einen ausreichend guten Halt, um ein Lockern oder gar Verschieben der Isolierplatten mit Sicherheit zu verhindern. Dafür ist natürlich auch von Bedeutung, daß der große Durchmesser der Ankerteile den Isolierplatten in vertikaler Richtung einen sehr viel besseren Halt verleiht als die früher verwendeten dünnen Ankerdrähte.

Ein weiterer Vorteil des erfindungsgemäßen Dübelementes besteht darin, daß die Ankerteile ohne großen Kraftaufwand in die gebohrten Dübellocher eingesteckt werden können und auch ohne Drahtelement den Isolierplatten bereits einen guten Halt verleihen. Zum Halten eines Verblendmauerwerkes dienende Drahtelemente brauchen erst dann eingeschlagen zu werden, wenn das Verblendmauerwerk errichtet wird, so daß sie vorher keine Verletzungsgefahr bilden können. Das nachträgliche Eintreiben der Drahtelemente ist völlig problemlos, weil dadurch die der Ankerteile in den Dübellöchern endgültig positioniert und ihre Fixierung verbessert wird.

Der aufspreizbare Abschnitt des Ankerteiles kann eine in der Technik der Kunststoffdübel übliche Gestalt aufweisen. Insbesondere kann die Axialbohrung des aufspreizbaren Abschnittes sich zu dessen Ende hin verjüngen, so daß der aufspreizbare Abschnitt von einem eingetriebenen oder eingeschraubten Teil, insbesondere von der Spitze des Luftschichtankers, aufgetrieben wird und sich dann mit seinen gespreizten Abschnitten an die Wand der entsprechenden Bohrung fest anlegt. Dabei können Längsschlitze im aufspreizbaren Abschnitt das Spreizen und eine Profilierung seiner Außenseite das Verankern in der Bohrung fördern. Der bei bestimmungsgemäßem Gebrauch des Dübelelementes aus der im tragenden Mauerwerk angebrachten Bohrung herausra gende, mit quer verlaufenden Rippen versehene, hülsenförmige Abschnitt läßt es ohne weiteres zu, das Drahtelement eines Luftschichtankers in den Ankerteil einzutreiben und dadurch gleichzeitig für eine sichere Befestigung des Ankerteiles und des Drahtelementes zu sorgen. Es ist aber auch ersichtlich, daß der Ankerteil unabhängig von dem Drahtelement eines Luftschichtankers als Mittel zur Befestigung von Isolierplatten oder dergleichen an der Außenseite einer Wand benutzt werden kann. In diesem Fall würde es genügen, an Stelle des Drahtelementes eines Luftschichtankers irgendeinen anderen Spreizkörper in den Ankerteil einzutreiben, welcher Spreizkörper dann nicht über den hülsenförmigen Abschnitt überzustehen braucht. Vielmehr könnte dann ein Spreizkörper verwendet werden, der mit dem äußeren Ende des hülsenförmigen Abschnittes abschneidet.

Die Länge des hülsenförmigen Abschnittes bestimmt die Dicke der Isolierplatten, die mittels des erfindungsgemäßen Dübelelementes befestigt werden können, da Voraussetzung für eine solche Befestigung ist, daß das Innenprofil der Haltescheibe mit den quer verlaufenden Rippen des hülsenförmigen Abschnittes in Eingriff kommen kann. Im einfachsten Fall muß also der hülsenförmige Abschnitt länger sein als die dickste Isolierplatte, deren Befestigung mit einem solchen Dübelement beabsichtigt ist. Wenn das Dübelelement zur Befestigung von Platten sehr unterschiedlicher Dicke eingerichtet sein soll, würde in diesem Fall bei der Befestigung relativ dünner Platten der hülsenförmige Abschnitt über solche dünnen Platten sehr weit überstehen. Zwar könnte daran gedacht werden, den hülsenförmigen Abschnitt an der Außenseite der aufgebrachten Haltescheibe abzuschneiden, jedoch wird da im allgemeinen der zuvor in den Ankerteil eingetriebene Spreizkörper hinderlich sein. Daher kann bei der Verwendung dünner Isolierplatten der überstehende Abschnitt länger sein als der gewünschte Abstand zwischen der Außenseite der Isolierplatten und dem Verblendmauerwerk.

Diese Schwierigkeiten werden in weiterer Ausgestaltung der Erfindung dadurch vermieden, daß die Haltescheibe mit einem von einer Seite abstehenden Rohrstutzen versehen ist, der ein Innenprofil aufweist. Bei Anwendung eines solchen Rohrstutzens können auch noch Isolierplatten befestigt werden, deren Dicke größer ist als die Länge des hülsenförmigen Abschnittes, sofern nur der in die Isolierplatte eingreifende Rohrstutzen der Haltescheibe noch das Ende des hülsenförmigen Abschnittes erreicht und die Enden des hülsenförmigen Abschnittes und des Rohrstutzens auf einer Länge in Eingriff kommen, bei der die in Eingriff stehenden Profilierungen das Ausüben der erforderlichen Spannkräfte gestatten. Bei dieser Ausführungsform der Erfindung bestimmt dann die Länge des an der Haltescheibe angebrachten Rohrstutzens die kleinste Dicke von Isolierplatten, die noch mit Sicherheit befestigt werden können.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 die Ansicht eines Dübelementes nach der Erfindung und

Fig. 2 u. 3 Querschnitte durch Abschnitte einer Mauer mit daran unter Verwendung des erfindungsgemäßen Dübelelementes befestigten Isolierplatten unterschiedlicher Dicke.

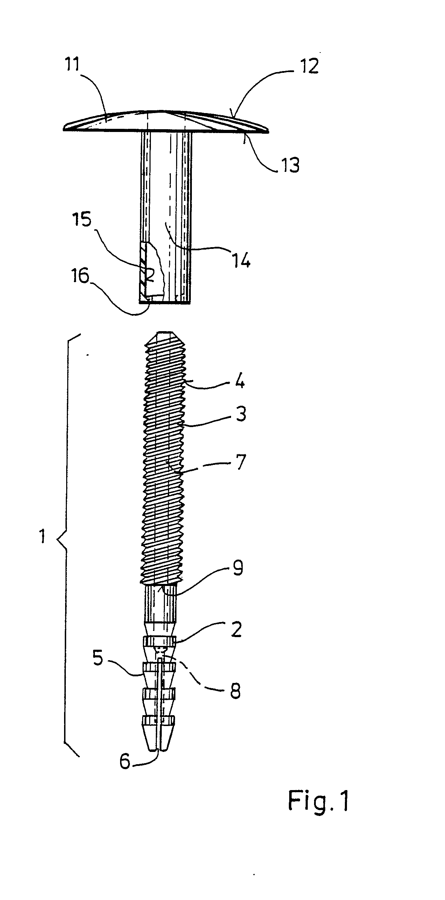

Das in Fig. 1 dargestellte Dübelelement besteht aus zwei Teilen, nämlich einem Ankerteil 1 und einer Haltescheibe 2. Beide Teile bestehen aus Kunststoff. Das Ankerteil 1 weist zwei Abschnitte 2 und 3 auf. Der eine Abschnitt 2 bildet einen aufspreizbaren Körper nach Art eines herkömmlichen Kunststoff-Dübels, während der andere Abschnitt 3 hülsenförmig ausgebildet und mit einem Profil in Form eines Außengewindes 4 versehen ist. Der den aufspreizbaren Körper bildende Abschnitt 2 weist an seiner Außenseite widerhakenartige Zähne 5 auf und ist mit bis zu seinem Ende reichenden Längsschlitzen 6 versehen, wie es von Kunststoff-Dübeln her bekannt ist. Ebenso weist das Ankerteil eine Bohrung 7 auf, die innerhalb des den aufspreizbaren Körper bildenden Abschnittes 2 einen Abschnitt 8 verminderten Durchmessers besitzt, der sich bis zum Ende des Ankerteiles erstreckt.

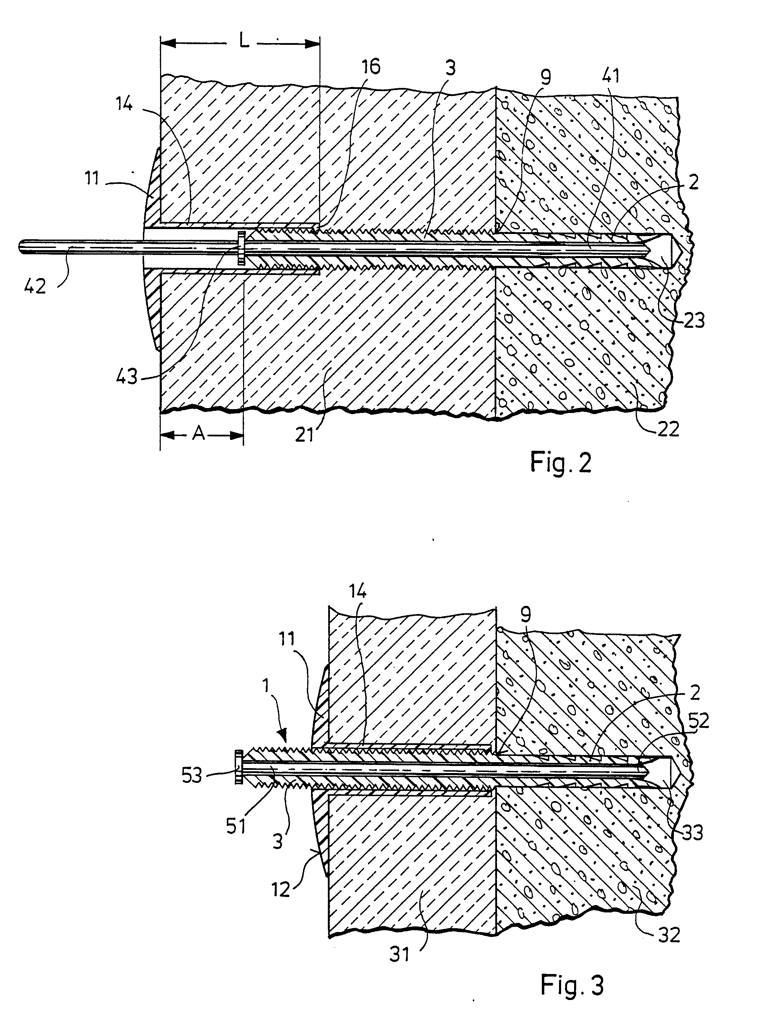

Die dem Ankerteil 1 zugeordnete Haltescheibe 11 weist an einer Seite eine leicht gewölbte Oberfläche 12 auf, während von der anderen, ebenen Seite 13 ein Rohrstutzen 14 absteht, dessen Bohrung 15 am äußeren Ende des Rohrstutzens mit einem Innenprofil in Form eines Gewindeabschnitts 16 (siehe auch Fig. 2) versehen ist, der mit dem Außengewinde auf dem hülsenförmigen Abschnitt 3 des Ankerteiles 1 zusammenpaßt, so daß die Haltescheibe 11 mit ihrem Rohrstutzen 14 auf den hülsenförmigen Abschnitt des Ankerteiles 1 in Eingriff bringbar ist.

Das erfindungsgemäße Dübelelement dient zur Befestigung von Isolierplatten an einer tragenden Mauer. Wie aus den Fig. 2 u. 3 ersichtlich, werden zur Befestigung solcher Isolierplatten 21 bzw. 31 in die tragende Mauer 22 bzw. 32 Löcher 23 bzw. 33 gebohrt, deren Durchmesser und Tiefe dem aufspreizbaren Abschnitt 2 des Ankerteiles entspricht, so daß dieser aufspreizbare Abschnitt 2 in die entsprechende Bohrung 23 bzw. 33 vollständig eingeschoben werden kann, und das Ankerteil mit der Schulter 9 zwischen dem aufspreizbaren Abschnitt 2 und dem hülsenförmigen Abschnitt 3 an der Außenseite der tragenden Mauer 22 bzw. 32 zur Anlage kommt. Der aufspreizbare Abschnitt 2 des Dübelelementes verhält sich wie ein üblicher Kunststoff-Dübel, der durch Eintreiben eines aufspreizbaren Körpers in Form des glatten oder mit einem Gewinde versehenen Schaftes eines Befestigungselementes, wie z. B. eines Nagels, eines Hakens oder einer Schraube, in die Bohrung aufgespreizt wird, so daß die durch die Längsschlitze 6 getrennten Teilabschnitte mit ihren widerhakenartigen Zähnen 5 fest an die Wandung der Bohrung angepreßt werden und dadurch das Befestigungselement in der Bohrung fest verankern. Das Bohren der Löcher 23, 33 erfolgt vorteilhaft durch die zuvor in die richtige Lage gebrachten Isolierplatten 21, 31 hindurch, so daß die Isolierplatten nach dem Einstecken der Dübelelemente in einer zuvor genau definierten Lage gehalten werden.

Bei dem in Fig. 2 dargestellten Ausführungsbeispiel dient als Spreizkörper das Ende 41 eines Drahtelementes 42, das zusammen mit dem Ankerteil des Dübelementes einen Luftschichtanker bildet. Eine auf dem Drahtelement 42 angebrachte Scheibe 43 findet am äußeren Ende des hülsenförmigen Abschnittes 3 des Ankerteiles Anschlag. Die Bohrung des hülsenförmigen Abschnittes 3 hat einen ausreichend großen Durchmesser, um das Ende 41 des Drahtelementes 42 passieren zu lassen. Dagegen treibt dieses Ende 41 den aufspreizbaren Abschnitt 2 des Ankerteiles im Bereich des Abschnittes 8 der Bohrung 7, der einen verminderten Durchmesser hat, in der oben beschriebenen Weise auseinander, so daß eine sichere Verankerung des Drahtelementes stattfindet. Das äußere Ende des Drahtelementes 42 kann dann in üblicher Weise abgewinkelt und in ein nicht näher dargestelltes Verblendmauerwerk eingemauert werden. Von besonderem Vorteil ist, daß das Drahtelement erst nach der Befestigung der Isolierplatten zu erfolgen braucht, wenn ein vorgesetztes Verblendmauerwerk die Höhe des Dübelelementes erreicht.

Bei dem in Fig. 2 dargestellten Ausführungsbeispiel dient das erfindungsgemäße Dübelelement zum Halten einer Isolierplatte 21, deren Dicke größer ist als die Länge des hülsenförmigen Abschnittes 3 des Ankerteiles. Allerdings ist der überstehende Abschnitt A der Isolierplatte kleiner als die Länge L des Rohrstutzens 14 an der Rückseite 13 der Haltescheibe 11, so daß der in eine entsprechende Bohrung der Isolierplatte 21 hineinragende Rohrstutzen 14 das Ende des hülsenförmigen Abschnittes 3 umgreift, auf das Außengewinde dieses Abschnittes aufgeschraubt ist und dadurch mit diesem Abschnitt in fester, formschlüssiger Verbindung steht. Dabei kann die Haltescheibe 11 innerhalb der durch die Reiß-und Druckfestigkeit der Materialen gegebenen Grenzen beliebig fest an die Isolierplatte 21 und mit dieser gegen das tragende Mauerwerk 22 gespannt sein.

Das Ausführungsbeispiel nach Fig. 3 unterscheidet sich von dem Ausführungsbeispiel nach Fig. 2 im wesentlichen dadurch, daß zum Verankern des Ankerteiles 1 in der Bohrung 33 der tragenden Mauer 32 nicht das Drahtelement 42 eines Luftschichtankers Verwendung findet, sondern ein besonderer, nagelartiger Spreizkörper 51, daß mit seinem Ende 52 wiederum bis in das Ende des aufspreizbaren Abschnittes 2 des Ankerteiles 1 reicht, wenn es mit einem Kopf 53 am äußeren Ende des hülsenförmigen Abschnittes 3 des Ankerteiles anliegt. Weiterhin ist in diesem Fall die Isolierplatte 31 erheblich dünner als die Isolierplatte 21 nach Fig. 2, nämlich nur wenig dicker als der Rohrstutzen 14 der Haltescheibe 11 lang ist. Daher ist in diesem Fall die Haltescheibe 11 mit ihrem Rohrstutzen 14 auf den hül senförmigen Abschnitt 3 des Ankerteiles so weit ausgeschraubt, daß das Ende des Rohrstutzens 14 fast die Außenflache der tragenden Mauer 32 berührt und der hülsenförmige Abschnitt 3 des Ankerteiles 1 aus der gewölbten Vorderseite 12 der Haltescheibe 11 herausragt. Trotzdem ist auch hier wieder ein festes Anpressen der Isolierpatte 31 an die tragende Mauer 32 durch die auf das Ankerteil 1 des Dübelelementes aufgeschraubte Haltescheibe 11 gewährleistet.

Es versteht sich, daß die Erfindung nicht auf das dargstellte Ausführungsbeispiel beschränkt ist, sondern Abweichungen davon möglich sind, ohne den Rahmen der Erfindung zu verlassen. Insbesondere kann der aufspreizbare Abschnitt 2 des Ankerteiles 1 nach Art eines üblichen Kunststoff-Dübels ausgebildet sein und demgemäß eine der vielen Formen annehmen, die für solche Dübel bekannt sind oder auch noch ersonnen werden. Weiterhin kann der hülsenförmige Abschnitt 3 mit Profilen beliebiger Art versehen sein, sofern sie nur quer zu seiner Achse gerichtete Anschlagflächen für ein in der Bohrung der Haltescheibe angebrachtes Profil bilden und das Aufbringen der Haltescheibe, insbesondere durch Aufschieben unter gleichzeitiger, elastischer Verformung der Profile zulassen. Gewinde haben den Vorteil, daß sie durch Drehen ein besonders festes Anlegen der Haltescheiben ermöglichen. Trotzdem kann auch ein Gewindeprofil so ausgebildet sein, daß es ein Aufschieben der Haltescheibe zuläßt. Dabei sind neben Normgewinden auch Gewinde mit trapezformigen oder rechteckigen Querschnitten sowie auch Verriegelungskämme denkbar, also eine Art Gewinde, deren Gänge sich nicht über den ganzen Umfang des hülsenförmigen Abschnittes erstrecken, sondern durch in Axialrichtung miteinander fluchtende Unterbrechungen die Möglichkeit bieten, die Scheibe in etwa bis zum Anschlag an die zu fixierende Isolierplatte auf

## Ansprüche

1. Dübelelement, insbesondere für Luftschichtanker, mit einem aufspreizbaren Körper aus Kunststoff,
dadurch gekennzeichnet,
daß der aufspreizbare Körper von dem aufspreizbaren Abschnitt (2) eines Ankerteiles (1) gebildet wird, an den sich ein hülsenförmiger Abschnitt (3) anschließt, der mit quer zu seiner Achse gerichteten Rippen (4) versehen ist, und daß dem hülsenformigen Abschnitt (3) eine Haltescheibe (11) mit einer der Profilierung (4) des hülsenförmigen Abschnittes (3) angepaßten, zentralen Bohrung (15, 16) zugeordnet ist.

2. Dübelelement nach Anspruch 1, dadurch gekennzeichnet, daß von einer Seite der Haltescheibe (11) ein mit einem Innenprofil (16) versehener Rohrstutzen (14) absteht.

3. Dübelement, nach Anspruch 1 oder 2, dadurch gekennzeichnet, daß die Profilierung (4) von einem Außengewinde gebildet wird und die Bohrung (15, 16) ein Innengewinde (16) aufweist.

Fig.1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 835 471 (GERHARD) * Figuren * | 1-3 | F 16 B 13/12 |
| A | CH-A- 453 801 (ERIKSSON) * Figuren * | 1,3 | |
| A | FR-A-2 378 972 (SPIT) * Figuren * | 1,3 | |
| A | DE-A-3 500 458 (SARACENI) * Figuren * | 1,3 | |
| A | DE-U-1 917 028 (FISCHER) * Figuren * | 1 | |
| A | DE-A-2 437 308 (UPAT) * Figuren * | 2 | |

RECHERCHIERTE SACHGEBIETE (Int. Cl.4)

F 16 B 13/00

Der vorliegende Recherchenbericht wurde für alle Patentansprüche erstellt

| Recherchenort | Abschlußdatum der Recherche | Prüfer |
|---|---|---|
| BERLIN | 02-12-1987 | SCHAEFFLER C.A.A. |

EPO FORM 1503 03.82 (P0403)